# EUROPEAN PATENT SPECIFICATION

(11) **EP 1 686 052 B1**
(45) Date of publication and mention of the grant of the patent: **21.04.2010**
(21) Application number: 06250117.6
(22) Date of filing: 11.01.2006
(51) Int. Cl.: B62K 3/00

(54) **Improved scooter**
Roller
Trottinette

(30) Priority: 26.01.2005 GB 0501600
(43) Date of publication of application: 02.08.2006
(73) Proprietor: H Grossman Limited, Glasgow G73 1UB (GB)
(72) Inventor: Grossman, Martin, Quay Industrial Estate Glasgow, G73 1UB (GB)
(74) Representative: Moreland, David

(56) References cited:
- GB-A- 2 381 503
- GB-A- 2 397 808
- US-A- 5 132 883
- US-A1- 2002 135 998
- US-A1- 2003 007 352
- PATENT ABSTRACTS OF JAPAN vol. 2003, no. 12, 5 December 2003 (2003-12-05) & JP 2003 265673 A (PEGASUS NET KK; SUGIYAMA HIROICHI), 24 September 2003 (2003-09-24)

## Description

### FIELD OF INVENTION

The present invention relates to an improved scooter or similar type of self/foot propelled transport means. The invention particularly, but not exclusively, relates to a scooter or the like incorporating a novel or novelty illumination or lighting effect.

### BACKGROUND OF INVENTION

Scooters have undergone an upsurge in popularity in recent years, e.g. because of innovations such as folding scooters or "micro-scooters".

Patent Abstracts of Japan Vol. 2003, no. 12, and JP 2003 265673 A (PEGASUS NET KK; SUGIYAMA HIROICHI) discloses a lighting skateboard having light emitting diodes (LEDs) embedded at an outer peripheral end on at least one of the upper, bottom and side surfaces of the skateboard.

It is an object of at least one embodiment of at least one aspect of the present invention to provide an improved scooter incorporating a novel or novelty lighting effect.

### SUMMARY OF INVENTION

According to a first aspect of the present invention there is provided a scooter or other self or foot propelled vehicle or the like having a platform for supporting a user, the platform having an upper surface having illumination means, **characterised in that** the platform comprises a lower platform portion and an upper platform portion, the upper platform portion being at least part transparent or translucent and comprising a foot-plate.

The illumination means may comprise or incorporate a novelty lighting effect.

Provision of an illumination means or novelty lighting effect on the upper surface of a scooter may, when illuminated, make the scooter more visible to onlookers and/or passers-by and/or to a user. Making a scooter more visible can assist in avoiding and/or reducing accidents involving scooters, and/or can provide an additional visual effect such as a novelty visual effect, e.g. when the rider is performing stunts or manoeuvres.

Provision of an at least part transparent or translucent platform permits effects, such as novelty lighting effects, to be incorporated within or adjacent to the platform whilst still being visible.

Preferably, the scooter or self-propelled vehicle is a scooter.

Most preferably, the scooter is a so-called" micro-scooter".

Preferably, the scooter or micro-scooter is collapsible.

Alternatively, the scooter or self-propelled vehicle may be a skateboard, e.g. a training skateboard provided with a handle, which handle may be collapsible.

Preferably, at least part of the platform is extruded from metal.

Advantageously, alternatively or additionally, the upper platform portion comprises a polymeric or plastics material. Where the upper platform portion of the platform comprises a polymeric or plastics material preferably, the plastics material may be a thermoplastic such as ABS. A thermoplastic platform, such as ABS, is suitable for high volume moulding processes such as injection moulding.

Using injection moulding to manufacture a polymeric or plastics platform or extrusion to manufacture a metal platform allows part of the platform to be manufactured as a unitary component, thereby potentially increasing the strength of the platform and reducing the cost of manufacture of a platform. Where metal is used the metal may be substantially aluminium or an alloy thereof.

Most preferably, the platform comprises the lower platform portion made from extruded metal, and the upper platform portion made from a plastics material.

The platform may further include end caps. The end caps may be used to secure the lower and upper platform portions together.

Preferably, the illumination means are provided below, adjacent or within the platform. In use, light passes through the transparent or translucent part of the platform and/or passes through and/or reflects off inner surfaces, e.g. sidewalls thereof. The illumination means may therefore provide a pseudo "disco" floor effect.

Preferably, the transparent or translucent part of the platform permits light from the illumination means to pass through at least part of a top surface of the platform.

The transparent or translucent part of the platform may be translucent. Alternatively, the transparent or translucent part of the platform may be transparent. Where the transparent or translucent part of the platform is translucent, this may give rise to a "milky" effect. A "milky" effect diffuses the light effect created by the illumination means.

Preferably, the illumination means is provided by at least one and preferably a plurality of light sources, e.g. light emitting diodes (LEDs). LEDs are preferred as LEDs use relatively low levels of power whilst providing a desired visual effect.

The illumination means may be provided in a plurality of different colours. Preferably, the illumination means are selected from one or more of the following colours: red, blue, green, yellow, white, purple, pink, gold, turquoise, orange.

Most preferably, the LEDs are surface mounted display LEDs. Where surface mounted display LEDs are used, preferably, such are mounted on a printed circuit board (PCB).

Preferably, the PCB is located between the lower and upper platform portions of the platform.

Alternatively, the PCB is located on at least part of an upper surface of the platform.

Preferably, the PCB is secured to the platform of the scooter or self-propelled vehicle. The PCB may be secured to the platform of the scooter or self-propelled vehicle by securing means such as glue, rivets, screws or any other suitable securing means.

The PCB may be covered in a coating such as epoxy, e.g. an epoxy resin. Epoxy may be provided to protect the PCB; however, such may be arranged such that the LEDs are still visible.

Alternatively or additionally, the PCB may be covered by opaque or translucent means, paper or card and arranged such that the light from the illumination means passes through the opaque or translucent means, paper or card or is visible through apertures in the opaque or translucent means, paper or card.

Preferably, the transparent or translucent upper platform portion covers the LEDs.

Preferably, the transparent or translucent upper platform portion is a polymeric material.

The transparent or translucent upper platform portion may wrap around one or more of the edges of the lower platform portion of the platform.

The illumination means may be provided/further provided along at least first and second regions of the platform. Preferably, the first and second regions of the platform are adjacent first and second sides of the platform. Preferably in use, a user may place his or her foot between said first and second regions.
The illumination means may define a closed shape upon a portion of the platform, e.g. defining where a user should place a foot, in use. Providing guidance for a user as to where to place a foot on the platform can assist the user in selecting optimum placement of their foot to ride upon the scooter or vehicle and/or execute a manoeuvre.

Preferably, the scooter or other self-propelled vehicle includes control means for the user to select a desired operation mode of the illumination means.

It is preferred that alternative visual effects can be selected and controlled by the control means.

Preferably, the control means comprises switch means. The control means may be programmed to operate in a number of modes such as off and on and optionally continuous, flashing, strobing, chaser, etc.

Preferably, the illumination means is powered by one or more batteries. Alternatively, the scooter includes a power generator such as a dynamo for powering the illumination means.

The control means may further include a vibration operated switch. A vibration operated switch may react to vibrations passing through the scooter, for example, as the scooter passes over a rough surface, or when the scooter receives an impact such as a user's foot landing on the platform, or when the scooter is struck e.g. off a surface, e.g. the ground, so as to activate the illumination means.

Alternatively or additionally, the control means includes a weight sensor. A weight sensor may react to a user standing on the scooter to activate the illumination means.

Once activated the illumination means may illuminate for a fixed period of time, for example, 5 seconds. The illumination means may therefore continue to operate until shortly after movement ceases.

Preferably, at least part of the circuitry of the PCB is located at one end of the PCB. Where the scooter is a collapsible scooter or micro-scooter, preferably, part of the circuitry of the PCB is located adjacent the hinge of the scooter. The hinge provides useful additional protection for the circuitry.

Preferably, where the scooter or other self-propelled vehicle is a scooter, such is a two-wheeled scooter. Alternatively, the scooter has three wheels, e.g. a single front wheel and two rear wheels. The rear wheels may be co-axial with one another.

There may be provided means for spacing the lower platform portion from the upper platform portion.

The spacing means may comprise a plurality of pillars extending from the upper platform portion and beneficially integrally formed therewith.
The illumination means may be operable in response to a vibration or impact applied to the scooter or vehicle.

A vibration or impact can be a single or repetitive force applied to the scooter or the like, e.g. as the scooter travels over a surface, or it could be a single impact caused by the scooter landing on a surface after a manoeuvre has been performed, or an impact caused by a user mounting or striking the scooter or striking the scooter off a surface or other body.

The scooter or other self or foot propelled vehicle may comprise a three wheeled collapsible scooter or micro-scooter.

The scooter or other self or foot propelled vehicle may comprise a scooter, such as a three wheeled scooter, the scooter having at least two rear wheels, and further, including a rear brake.

The rear brake may comprise a brake member resiliently biased into a first position away from the rear wheels. Application of a force, e.g. from a foot of a user, may cause first and second portions of the brake member to frictionally engage respective first and second rear wheels.

The scooter or other self or foot propelled vehicle may comprise a scooter having handlebars, the handlebars incorporating a further illumination means such as a novelty lighting effect.

Preferably, the further illumination means or novelty lighting effect is provided on at least one end, and preferably both ends of the handlebars.

Preferably, the further illumination means or novelty lighting effect is provided by a self-contained battery operated unit.

Preferably, the further illumination means comprises at least one LED.

### BRIEF DESCRIPTION OF DRAWINGS

Embodiments of the present invention will now be described by way of example only and with reference to the accompanying figures, which are:
- **Figure 1**: a perspective view from above and to one side of a scooter according to a first embodiment of the present invention;
- **Figure 2**: a partial perspective view from above and to one side of part of the scooter of Figure 1;
- **Figure 3**: an exploded schematic view of part of a platform of the scooter Figure 1;
- **Figure 4**: a perspective view of an underside of part of the platform of the scooter of Figure 1;
- Figure 5: a top view of a printed circuit board of the scooter of Figure 1;
- **Figure 6**: a perspective view of an upper portion of the platform of the scooter of Figure 1;
- **Figure 7**: a close-up view from above of a hinge bracket and part of the printed circuit board of the scooter of Figure 1;
- **Figure 8**: a circuit diagram for the printed circuit board of Figure 5;
- **Figure 9**: a further circuit diagram for the printed circuit board of Figure 5;
- **Figure 10**: a rear view of part of the scooter of Figure 1 showing a rear brake;
- **Figure 11**: a schematic view of a printed circuit board having an alternative arrangement of LEDs according to a second embodiment of the present invention; and
- **Figure 12**: a perspective view of an alternative scooter according to a third embodiment of the present invention.

### DETAILED DESCRIPTION OF DRAWINGS

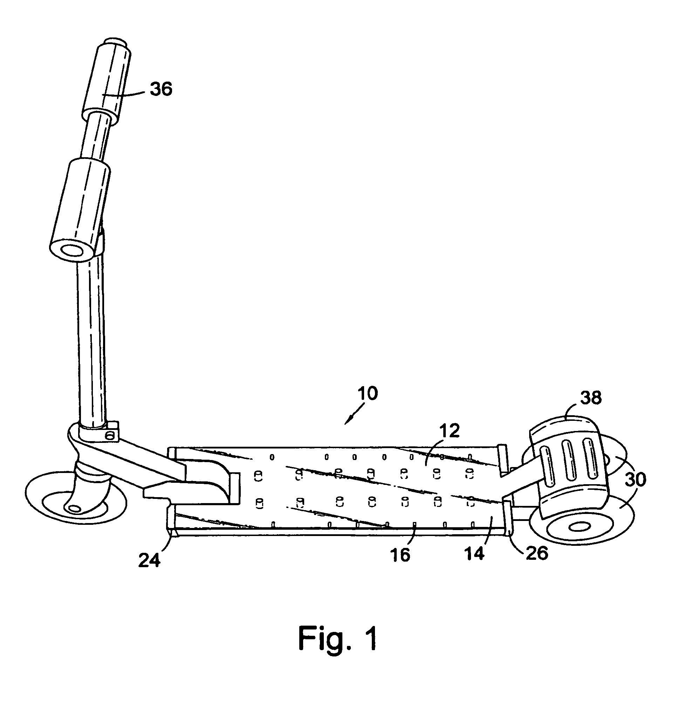

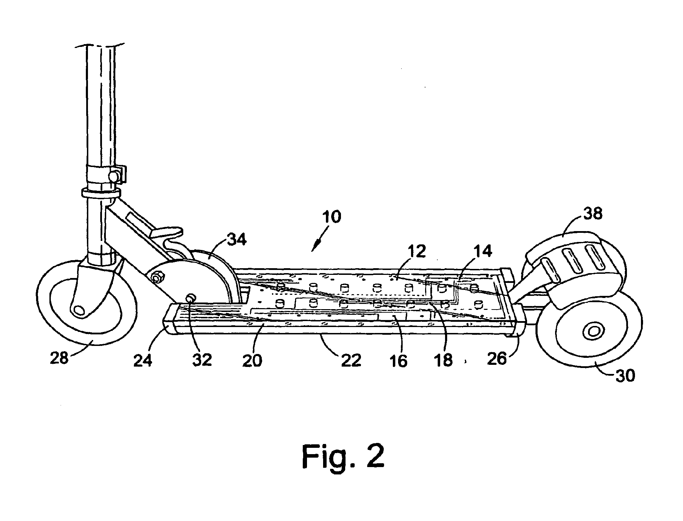

Referring initially to Figures 1 and 2, there are shown perspective views of a scooter, generally designated 10, according to a first embodiment of the present invention. The scooter 10 includes a platform 12 having an upper surface 14, which in this embodiment is transparent - although such may be partly transparent or translucent.

The scooter 10 further includes illumination means 16 which are mounted to a printed circuit board (PCB) 18 housed within the platform 10.

The platform 12 comprises an upper portion 20 injection moulded from transparent plastic material, a lower portion 22 made from aluminium, and a first end cap 24 and a second end cap 26.

In this example, the scooter 10 is a collapsible micro-scooter having a single front wheel 28 and a pair of rear wheels 30, or in a modification, a single rear wheel. The micro-scooter 10 collapses around a pivot 32, supported by a bracket 34. The micro-scooter 10 also includes handlebars 36 (shown on Figure 1) and a rear brake 38.

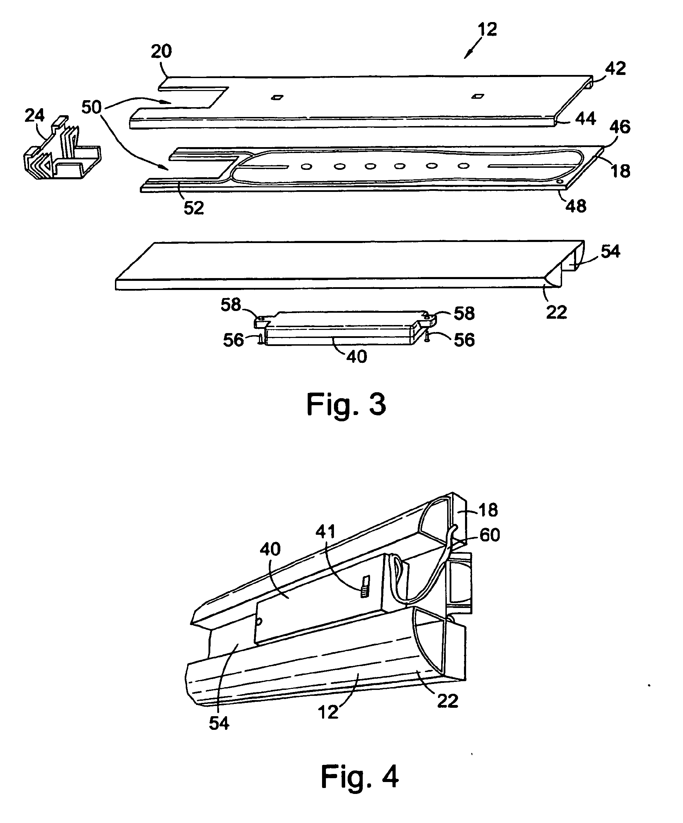

Referring now to Figure 3, there is shown an exploded schematic view of part of the platform 12 of the scooter 10. The PCB 18 is sandwiched between the upper portion 20 of the platform 12 and the lower portion 22 of the platform 12. It will also be noted that the upper portion 20 has downwardly depending sides 42, 44 which wrap around long sides 46, 48 of the PCB 18.

The upper platform portion 20 is secured to the lower platform portion 22 by means of the first end cap 24 and the second end cap (not shown for clarity).

The PCB 18 and the upper portion 20 include a cutouts 50,51, the purpose of which will be explained later.

The platform 12 further includes a control box 40 which includes batteries and circuitry (not shown) for controlling the illumination means 16. The control box 40 is connected to circuitry 52 on the PCB 18 by means of a wire or wires (not shown). The control box 40 is secured in a channel 54 defined by the lower portion 22 of the platform 12 by means of screws 56 which pass through brackets 58 on the control box 40. The control box 40 includes an on/off switch 41.

The arrangement of an underside of a lower platform portion 22 can be seen in Figure 4, which comprises a perspective view of an underside of part of the platform 12 of the scooter 10 of Figure 1.

The control box 40 is shown positioned in the channel 54 defined by the lower portion 22 of the platform 12. The wire 60 which connects the control box to the PCB 18 can be clearly seen. For clarity, the first end cap 24 is not shown. The lower platform 22 is, in this embodiment, an extruded section of aluminium.

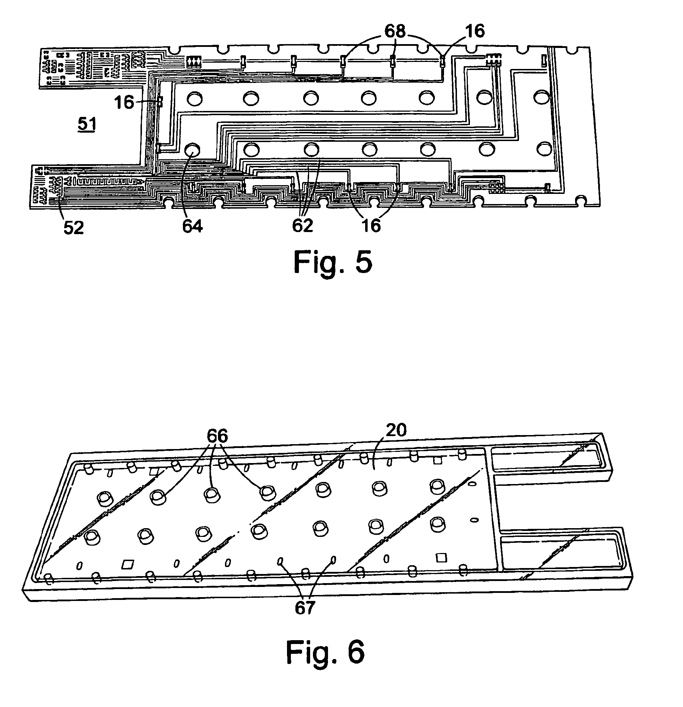

Referring now to Figure 5, there is shown a top view of the PCB 18 of the scooter 10. The control circuitry 52 of the PCB 18 can be seen adjacent the cut-out 50. Also included are a series of tracks 62, of which three are indicated, which transmit signals to the illumination means 16, of which four are indicated, in the form of surface mounted LEDs 68, of which three are indicated. The surface mounted LEDs 68, in this case are red and blue. It will, however, be appreciated that any available colour or colours may be provided.

The PCB 18 further includes a series of apertures 64. The purpose of these apertures 64 is discussed in connection with Figure 6.

The control box 40 (shown in Figure 4) and the circuitry 52 further include a vibration switch (not shown), which causes the illumination means 16 to flash, and/or strobe in response to a vibration being applied to the scooter 10.

Referring to Figure 6, there is shown a perspective view of the transparent, or alternatively translucent, upper portion 20 of the platform 12 of the scooter 10 of Figure 1. The upper portion 20 include pillars 66 which, when the platform 12 is assembled, extend through the apertures 64 in the PCB and engage the lower portion 22. The purpose of these pillars 66 is to transfer the weight of a user onto the lower portion 22 of the platform 12 without damaging the PCB 18, which is sandwiched between the upper and lower platform portions 20, 22.

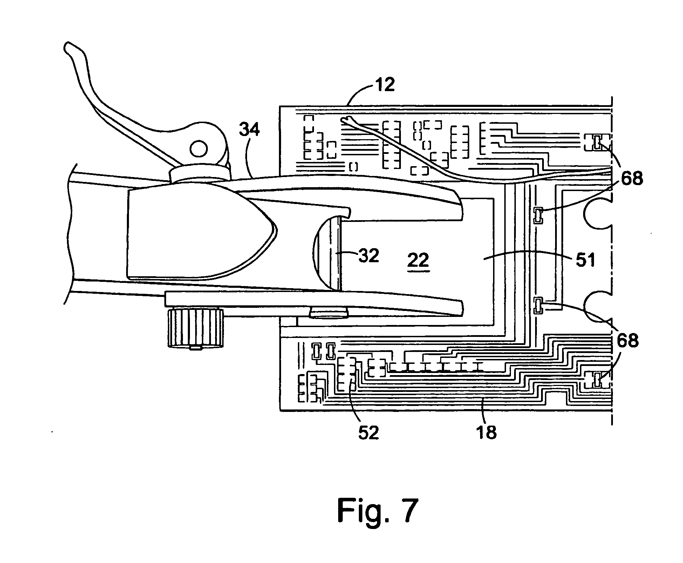

Referring now to Figure 7, there is shown a close-up top view of the hinge bracket 34 and part of the PCB 18 of the scooter 10 of Figure 1. The circuitry 52 is located at either side of the cut-out 50 in the upper portion 20 of the platform 12 and the PCB 18. This cut-out 50 accommodates the hinge bracket 34 which supports the pivot 32. The hinge bracket 34 is welded to the lower portion 22 of the platform 12. This arrangement permits the circuitry 52 to be, at least to some degree, protected by the presence of the bracket 34, as the location of the bracket 34 acts to prevent a user's foot extending onto this part of the platform 12 and applying weight to the upper portion 20 in the vicinity of the circuitry 52, which may damage the circuitry 52.

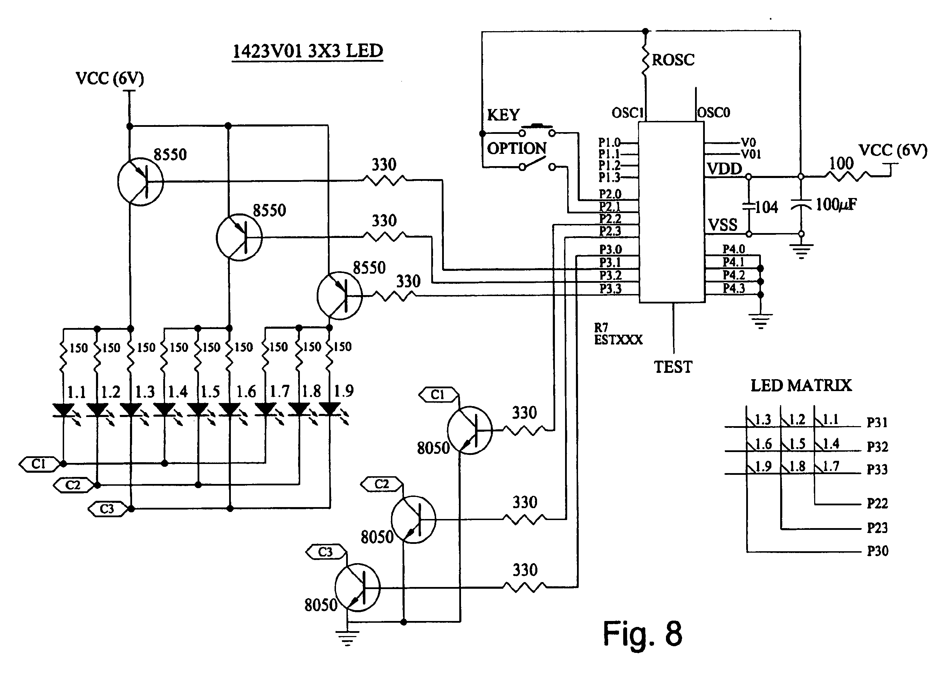

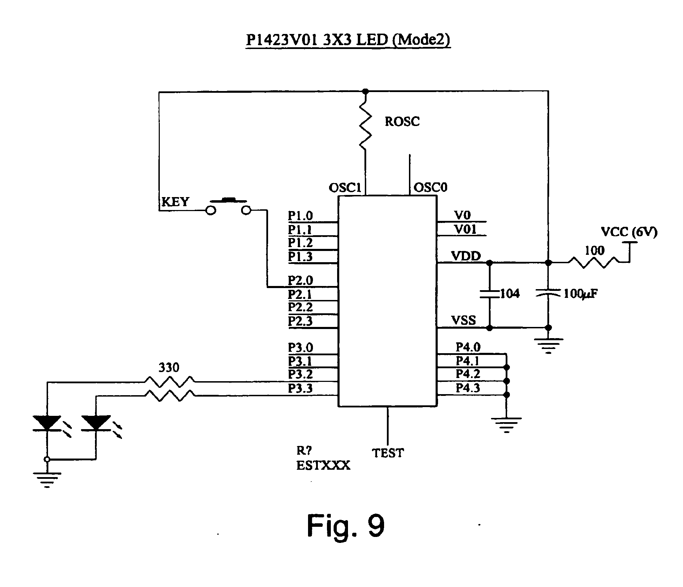

Figures 8 and 9 show circuit diagrams for the PCB 18.

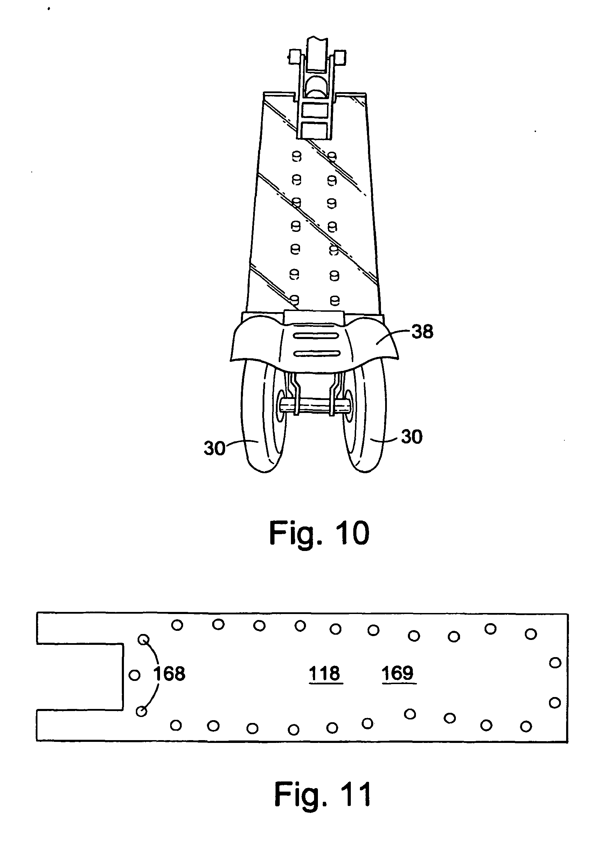

Figure 10 shows a rear view of part of the scooter 10 of Figure 1, and particularly shows the rear brake 38 and the rear wheels 30. As can be seen, the rear brake 38 is resiliently biased away from the rear wheels 30. However, in use, a force, may be applied e.g. via a foot of a user, to the brake 38 to cause first and second suitably shaped portions of the brake 38 to frictionally engage the rear wheels 30.

Referring now to Figure 11, there is shown an alternative schematic of a printed circuit board 118 showing an alternative arrangement of LEDs 168 (of which two are indicated). This arrangement of LEDs 168 indicates a region 169 in which a user may beneficially choose to place their foot.

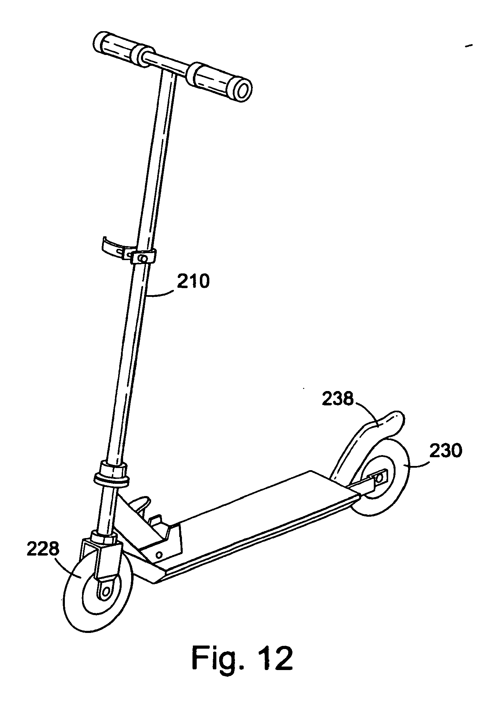

Finally, referring to Figure 12, there is shown a perspective view of an alternative scooter 210 according to a third embodiment of the present invention. This scooter 210 is a two-wheel scooter having a front wheel 228 and a rear wheel 230 with a rear brake 238. The scooter 210 may be substantially the same as the scooter 10,110 of the first and second embodiments, particularly regarding the provision of illumination means (not shown) and in the construction of the platform.

It will be understood that the foregoing embodiments of the present invention are given for illustrative purposes only, and that various modifications and improvements may be made to the scooter described herein without departing from the scope of the invention. For example, although the platform of the first embodiment is in part transparent, it could be in part translucent to defuse the light from the surface mounted LEDs and provide a different visual effect.

Similarly, the surface mounted LEDs can be of any colour or a combination of different colours and the vibration switch could alternatively or additionally be a weight sensor.

It will be appreciated that the preferred embodiments of the scooters hereinbefore described are advantageously collapsible "micro-scooters". However, it will be appreciated that the lighting effect described may be provided on other types of scooters, e.g. non-collapsible scooters, or alternatively skateboards or other foot propelled vehicles having a platform or deck and two or more wheels.

## Claims

1. A scooter or other self or foot propelled vehicle (10;210) comprising a platform (12) for supporting a user, the platform having an upper surface (14) having illumination means (16) **characterized in that** the platform comprises a lower platform portion (22) and an upper platform portion (20), the upper platform portion being at least part transparent or translucent and comprising a foot-plate.

2. A scooter or other self or foot propelled vehicle as claimed in claim 1, wherein the illumination means comprise or incorporate a novelty lighting effect.

3. A scooter or other self or foot propelled vehicle as claimed in claims 1 to 2, wherein the scooter or self-propelled vehicle is a scooter.

4. A scooter or other self or foot propelled vehicle as claimed in any of claims 1 to 3, wherein the scooter is a micro-scooter.

5. A scooter or other self or foot propelled vehicle as claimed in any of claims 1 to 4, wherein the scooter is collapsible.

6. A scooter or other self or foot propelled vehicle as claimed in either of claims 1 or 2, wherein the scooter or self-propelled vehicle is a skateboard, such as a training skateboard provided with a handle, which handle is optionally collapsible.

7. A scooter or other self or foot propelled vehicle as claimed in any of claims 1 to 6, wherein at least part of the platform is formed from an extruded metal material.

8. A scooter or other self or foot propelled vehicle as claimed in claims 1 to 7, wherein at least part of the platform comprises a polymeric or plastics material.

9. A scooter or other self or foot propelled vehicle as claimed in claim 8, wherein the metal is substantially aluminum or an alloy thereof.

10. A scooter or other self or foot propelled vehicle as claimed in any of claims 1 to 9, wherein the lower platform portion is extruded from a metallic material and the upper platform is made from a plastics material.

11. A scooter or other self or foot propelled vehicle as claimed in claim 10, wherein the platform further includes end caps (24, 26), which secure the lower and upper platform portions together.

12. A scooter or other self or foot propelled vehicle as claimed in any of claims 1 to 11, wherein the illumination means are provided below, adjacent or within the platform.

13. A scooter or other self or foot propelled vehicle as claimed in any of claims 10 or 11 or claim 12 when dependent upon claims 10 or 11, wherein, in use, light passes through the transparent or translucent upper platform portion of the platform and/or passes through and/or reflects off inner surfaces, such as sidewalls thereof.

14. A scooter or other self or foot propelled vehicle as claimed in claim 10 or claim 13, wherein the transparent or translucent upper platform portion of the platform permits light from the illumination means to pass through at least part of a top surface of the platform.

15. A scooter or other self or foot propelled vehicle as claimed in any of claims 10, 11 or 14, wherein the transparent or translucent upper platform portion is translucent.

16. A scooter or other self or foot propelled vehicle as claimed in any of claims 10, 11 or 14, wherein the transparent or translucent upper platform portion of the platform is transparent.

17. A scooter or other self or foot propelled vehicle as claimed in claim 15, wherein the transparent or translucent upper platform portion of the platform is translucent giving rise to a milky effect.

18. A scooter or other self or foot propelled vehicle as claimed in any of claims 1 to 17, wherein the illumination means is provided by a plurality of light sources such as light emitting diodes (LEDs) (68;168).

19. A scooter or other self or foot propelled vehicle as claimed in any of claims 1 to 18, wherein the illumination means are provided in one or more colours selected from red, blue, green, yellow, white, purple, pink, gold, turquoise, orange.

20. A scooter or other self or foot propelled vehicle as claimed in claim 18, wherein the LEDs are surface mounted display LEDs mounted on a printed circuit board (PCB) (18;118).

21. A scooter or other self or foot propelled vehicle as claimed in claim 20 when dependent upon claim 10, wherein the PCB is located between the lower and upper portions of the platform.

22. A scooter or other self or foot propelled vehicle as claimed in claim 20, wherein the PCB is located on at least part of an upper surface of the platform.

23. A scooter or other self or foot propelled vehicle as claimed in any of claims 20 to 22, wherein the PCB is secured to the platform of the scooter or self-propelled vehicle.

24. A scooter or other self or foot propelled vehicle as claimed in any of claims 20 to 23, wherein the PCB is covered in a coating such as epoxy resin.

25. A scooter or other self or foot propelled vehicle as claimed in any of claims 20 to 24, wherein the PCB is covered by opaque or translucent means, paper or card and arranged such that the light from the illumination means passes through the opaque or translucent means, paper or card or is visible through apertures in the opaque or translucent means, paper or card.

26. A scooter or other self or foot propelled vehicle as claimed in claim 18 when dependent upon claim 10, wherein the transparent or translucent part of the platform covers the LEDs.

27. A scooter or other self or foot propelled vehicle as claimed in claim 10, wherein the transparent or translucent upper platform portion of the platform comprises a polymeric material.

28. A scooter or other self or foot propelled vehicle as claimed in claim 10, wherein the transparent or translucent upper platform portion of the platform wraps around one or more of the edges (46;48) of the first portion of the platform.

29. A scooter or other self or foot propelled vehicle as claimed in claim 1, wherein the illumination means are provided along at least first and second regions of the platform, the first and second regions of the platform being adjacent first and second sides of the platform.

30. A scooter or other self or foot propelled vehicle as claimed in any of claims 1 to 29, wherein the illumination means defines a closed shape upon a portion of the platform, such as a portion where the user should place a foot, in use.

31. A scooter or other self or foot propelled vehicle as claimed in any of claims 1 to 30, wherein the scooter or other self-propelled vehicle includes control means (40) for a user to select a desired operation mode of the illumination means.

32. A scooter or other self or foot propelled vehicle as claimed in any of claims 1 to 31, wherein the control means comprises switch means (41), the control means being operable in a number of modes selected from off and on and optionally continuous, flashing, strobing, or chaser.

33. A scooter or other self or foot propelled vehicle as claimed in any of claims 1 to 32, wherein the illumination means is powered by one or more batteries.

34. A scooter or other self or foot propelled vehicle as claimed in claim 31, wherein the control means comprises a vibration operated switch.

35. A scooter or other self or foot propelled vehicle as claimed in claim 31 or claim 32, wherein the control means comprises a weight sensor.

36. A scooter or other self or foot propelled vehicle as claimed in claim 34 or claim 35, wherein, in use, once activated the illumination means illuminates for a fixed period of time.

37. A scooter or other self or foot propelled vehicle as claimed in claim 24 when dependent upon claim 5, wherein at least part of the circuitry of the PCB is located at one end of the PCB adjacent at least one side of a hinge of the scooter.

38. A scooter or other self or foot propelled vehicle as claimed in any of claims 1 to 37, wherein where the scooter or other self-propelled vehicle is a two-wheeled scooter or a three wheeled scooter having a single front wheel (28) and two rear wheels (30), the rear wheels being co-axial with one another.

39. A scooter or other self or foot propelled vehicle as claimed in claim 10 or any of claims 11 to 37 when dependent upon claim 10, wherein there are provided means for spacing the lower platform portion from the upper platform portion.

40. A scooter or other self or foot propelled vehicle as claimed in claim 39, wherein the spacing means comprises a plurality of pillars (66) extending from the upper platform portion.

41. A substantially planar member which comprises the upper platform portion of the self or foot propelled vehicle of any of claims 1 to 40.

42. A scooter or other self or foot propelled vehicle as claimed in claim 1, wherein the illumination means is operable in response to a vibration or impact applied to the scooter or vehicle.

43. A scooter or other self or foot propelled vehicle as claimed in claim 1, wherein the scooter or vehicle comprises a three wheeled collapsible scooter or micro-scooter.

44. A scooter or other self or foot propelled vehicle as claimed in claim 1, wherein the scooter has at least two rear wheels, and further, including a rear brake (38;238).

45. A scooter as claimed in claim 44, wherein the rear brake comprises a brake member resiliently biased into a first position away from the rear wheels, application of a force from a foot of a user causing first and second portions of the brake member to frictionally engage respective first and second rear wheels.

46. A scooter or other self or foot propelled vehicle as claimed in claim 1, wherein the scooter has handlebars, the handlebars incorporating a further illumination means such as a novelty lighting effect.

47. A scooter as claimed in claim 46 wherein the further illumination means or novelty lighting effect is provided on at least one end, or both ends of the handlebars.

48. A scooter as claimed in claim 47, wherein the further illumination means or novelty lighting effect is provided by a self-contained battery operated unit.

49. A scooter as claimed in either of claims 47 or 48, wherein the further illumination means comprises at least one LED.

## Patentansprüche

1. Roller oder anderes selbst- oder fußgetriebenes Fahrzeug (10; 210), das eine Plattform (12) für das Tragen eines Benutzers aufweist, wobei die Plattform eine obere Fläche (14) mit einem Beleuchtungsmittel (16) aufweist, **dadurch gekennzeichnet, dass** die Plattform einen unteren Plattformabschnitt (22) und einen oberen Plattformabschnitt (20) aufweist, wobei der obere Plattformabschnitt mindestens teilweise durchsichtig oder durchscheinend ist und eine Fußplatte aufweist.

2. Roller oder anderes selbst- oder fußgetriebenes Fahrzeug nach Anspruch 1, bei dem das Beleuchtungsmittel einen neuartigen Beleuchtungseffekt aufweist oder einschließt.

3. Roller oder anderes selbst- oder fußgetriebenes Fahrzeug nach Ansprüchen 1 bis 2, bei dem der Roller oder das selbstgetriebene Fahrzeug ein Roller ist.

4. Roller oder anderes selbst- oder fußgetriebenes Fahrzeug nach einem der Ansprüche 1 bis 3, bei dem der Roller ein Mikroroller ist.

5. Roller oder anderes selbst- oder fußgetriebenes Fahrzeug nach einem der Ansprüche 1 bis 4, bei dem der Roller zusammenklappbar ist.

6. Roller oder anderes selbst- oder fußgetriebenes Fahrzeug nach entweder Anspruch 1 oder 2, bei dem der Roller oder das selbstgetriebene Fahrzeug ein Skateboard ist, wie beispielsweise ein Übungs-Skateboard, das mit einem Griff versehen ist, wobei der Griff wahlweise zusammenklappbar ist.

7. Roller oder anderes selbst- oder fußgetriebenes Fahrzeug nach einem der Ansprüche 1 bis 6, bei dem mindestens ein Teil der Plattform aus einem stranggepressten Metallmaterial hergestellt wird.

8. Roller oder anderes selbst- oder fußgetriebenes Fahrzeug nach Ansprüchen 1 bis 7, bei dem mindestens ein Teil der Plattform ein polymeres oder Kunststoffmaterial aufweist.

9. Roller oder anderes selbst- oder fußgetriebenes Fahrzeug nach Anspruch 8, bei dem das Metall im Wesentlichen Aluminium oder eine Legierung davon ist.

10. Roller oder anderes selbst- oder fußgetriebenes Fahrzeug nach einem der Ansprüche 1 bis 9, bei dem der untere Plattformabschnitt aus einem metallischen Material stranggepresst und die obere Plattform aus einem Kunststoffmaterial hergestellt wird.

11. Roller oder anderes selbst- oder fußgetriebenes Fahrzeug nach Anspruch 10, bei dem die Plattform außerdem Endkappen (24, 26) umfasst, die den unteren und den oberen Plattformabschnitt miteinander sichern.

12. Roller oder anderes selbst- oder fußgetriebenes Fahrzeug nach einem der Ansprüche 1 bis 11, bei dem das Beleuchtungsmittel unterhalb, benachbart oder innerhalb der Plattform vorhanden ist.

13. Roller oder anderes selbst- oder fußgetriebenes Fahrzeug nach einem der Ansprüche 10 oder 11 oder Anspruch 12, wenn er von den Ansprüchen 10 oder 11 abhängig ist, bei dem bei Benutzung das Licht durch den durchsichtigen oder durchscheinenden oberen Plattformabschnitt der Plattform hindurchgeht und/oder durch die inneren Flächen, wie beispielsweise deren Seitenwände, hindurchgeht und/oder davon reflektiert wird.

14. Roller oder anderes selbst- oder fußgetriebenes Fahrzeug nach Anspruch 10 oder Anspruch 13, bei dem der durchsichtige oder durchscheinende obere Plattformabschnitt der Plattform gestattet, dass das Licht vom Beleuchtungsmittel durch mindestens einen Teil einer oberen Fläche der Plattform hindurchgeht.

15. Roller oder anderes selbst- oder fußgetriebenes Fahrzeug nach einem der Ansprüche 10, 11 oder 14, bei dem der durchsichtige oder durchscheinende obere Plattformabschnitt durchscheinend ist.

16. Roller oder anderes selbst- oder fußgetriebenes Fahrzeug nach einem der Ansprüche 10, 11 oder 14, bei dem der durchsichtige oder durchscheinende obere Plattformabschnitt der Plattform durchsichtig ist.

17. Roller oder anderes selbst- oder fußgetriebenes Fahrzeug nach Anspruch 15, bei dem der durchsichtige oder durchscheinende obere Plattformabschnitt der Plattform durchscheinend ist, was einen milchartigen Effekt verursacht.

18. Roller oder anderes selbst- oder fußgetriebenes Fahrzeug nach einem der Ansprüche 1 bis 17, bei dem das Beleuchtungsmittel durch eine Vielzahl von Lichtquellen bereitgestellt wird, wie beispielsweise lichtemittierende Dioden (LEDs) (68; 168).

19. Roller oder anderes selbst- oder fußgetriebenes Fahrzeug nach einem der Ansprüche 1 bis 18, bei dem das Beleuchtungsmittel in einer oder mehreren Farben bereitgestellt wird, ausgewählt unter rot, blau, grün, gelb, weiß, purpurrot, pink, gold, türkis, orange.

20. Roller oder anderes selbst- oder fußgetriebenes Fahrzeug nach Anspruch 18, bei dem die LEDs oberflächenmontierte Anzeige-LEDs sind, die auf einer Leiterplatte (PCB) (18; 118) montiert sind.

21. Roller oder anderes selbst- oder fußgetriebenes Fahrzeug nach Anspruch 20, wenn er vom Anspruch 10 abhängig ist, bei dem die Leiterplatte zwischen dem unteren und dem oberen Abschnitt der Plattform angeordnet ist.

22. Roller oder anderes selbst- oder fußgetriebenes Fahrzeug nach Anspruch 20, bei dem die Leiterplatte auf mindestens einem Teil der oberen Fläche der Plattform angeordnet ist.

23. Roller oder anderes selbst- oder fußgetriebenes Fahrzeug nach einem der Ansprüche 20 bis 22, bei dem die Leiterplatte an der Plattform des Rollers oder des selbstgetriebenen Fahrzeuges gesichert ist.

24. Roller oder anderes selbst- oder fußgetriebenes Fahrzeug nach einem der Ansprüche 20 bis 23, bei dem die Leiterplatte in einer Beschichtung abgedeckt wird, wie beispielsweise Epoxidharz.

25. Roller oder anderes selbst- oder fußgetriebenes Fahrzeug nach einem der Ansprüche 20 bis 24, bei dem die Leiterplatte durch ein undurchsichtiges oder durchscheinendes Mittel, Papier oder Pappe abgedeckt und so angeordnet wird, dass das Licht vom Beleuchtungsmittel durch das undurchsichtige oder durchscheinende Mittel, Papier oder Pappe hindurchgeht oder durch Öffnungen im undurchsichtigen oder durchscheinenden Mittel, Papier oder Pappe sichtbar ist.

26. Roller oder anderes selbst- oder fußgetriebenes Fahrzeug nach Anspruch 18, wenn er vom Anspruch 10 abhängig ist, bei dem der durchsichtige oder durchscheinende Teil der Plattform die LEDs bedeckt.

27. Roller oder anderes selbst- oder fußgetriebenes Fahrzeug nach Anspruch 10, bei dem der durchsichtige oder durchscheinende obere Plattformabschnitt der Plattform ein polymeres Material aufweist.

28. Roller oder anderes selbst- oder fußgetriebenes Fahrzeug nach Anspruch 10, bei dem sich der durchsichtige oder durchscheinende obere Plattformabschnitt der Plattform um einen oder mehrere der Ränder (46; 48) des ersten Abschnittes der Plattform wickelt.

29. Roller oder anderes selbst- oder fußgetriebenes Fahrzeug nach Anspruch 1, bei dem das Beleuchtungsmittel längs von mindestens einem ersten und zweiten Bereich der Plattform bereitgestellt wird, wobei der erste und der zweite Bereich der Plattform der ersten und der zweiten Seite der Plattform benachbart sind.

30. Roller oder anderes selbst- oder fußgetriebenes Fahrzeug nach einem der Ansprüche 1 bis 29, bei dem das Beleuchtungsmittel eine geschlossene Form auf einem Abschnitt der Plattform definiert, wie beispielsweise einen Abschnitt, wo der Benutzer bei der Benutzung einen Fuß platzieren sollte.

31. Roller oder anderes selbst- oder fußgetriebenes Fahrzeug nach einem der Ansprüche 1 bis 30, bei dem der Roller oder das andere selbstgetriebene Fahrzeug eine Steuereinrichtung (40) für einen Benutzer umfasst, um eine gewünschte Betriebsart des Beleuchtungsmittels auszuwählen.

32. Roller oder anderes selbst- oder fußgetriebenes Fahrzeug nach einem der Ansprüche 1 bis 31, bei dem die Steuereinrichtung eine Schalteinrichtung (41) aufweist, wobei die Steuereinrichtung in einer Anzahl von Betriebsarten betätigt werden kann, die unter folgenden ausgewählt werden: Aus und Ein und wahlweise kontinuierlich, blinkend, stroboskopisch oder verfolgend.

33. Roller oder anderes selbst- oder fußgetriebenes Fahrzeug nach einem der Ansprüche 1 bis 32, bei dem das Beleuchtungsmittel durch eine oder mehrere Batterien angetrieben wird.

34. Roller oder anderes selbst- oder fußgetriebenes Fahrzeug nach Anspruch 31, bei dem die Steuereinrichtung einen schwingungsbetätigten Schalter aufweist.

35. Roller oder anderes selbst- oder fußgetriebenes Fahrzeug nach Anspruch 31 oder Anspruch 32, bei dem die Steuereinrichtung einen Gewichtssensor aufweist.

36. Roller oder anderes selbst- oder fußgetriebenes Fahrzeug nach Anspruch 34 oder Anspruch 35, bei dem bei Benutzung das Beleuchtungsmittel über eine bestimmte Zeitdauer leuchtet, sobald es aktiviert ist.

37. Roller oder anderes selbst- oder fußgetriebenes Fahrzeug nach Anspruch 24, wenn er vom Anspruch 5 abhängig ist, bei dem mindestens ein Teil der Schaltung der Leiterplatte an einem Ende der Leiterplatte benachbart mindestens einer Seite einer Drehachse des Rollers angeordnet ist.

38. Roller oder anderes selbst- oder fußgetriebenes Fahrzeug nach einem der Ansprüche 1 bis 37, bei dem, wo der Roller oder das selbstgetriebene Fahrzeug ein Zweiradroller oder ein Dreiradroller mit einem einzelnen Vorderrad (28) und zwei Hinterrädern (30) ist, die Hinterräder koaxial zueinander sind.

39. Roller oder anderes selbst- oder fußgetriebenes Fahrzeug nach Anspruch 10 oder einem der Ansprüche 11 bis 37, wenn sie vom Anspruch 10 abhängig sind, bei dem Mittel für das Beabstanden des unteren Plattformabschnittes vom oberen Plattformabschnitt vorhanden sind.

40. Roller oder anderes selbst- oder fußgetriebenes Fahrzeug nach Anspruch 39, bei dem das Mittel für das Beabstanden eine Vielzahl von Stützen (66) aufweist, die sich vom oberen Plattformabschnitt aus erstrecken.

41. Im Wesentlichen ebenes Element, das den oberen Plattformabschnitt des selbst- oder fußgetriebenen Fahrzeuges nach einem der Ansprüche 1 bis 40 aufweist.

42. Roller oder anderes selbst- oder fußgetriebenes Fahrzeug nach Anspruch 1, bei dem das Beleuchtungsmittel als Reaktion auf eine Schwingung oder einen Stoß funktionsfähig ist, die beim Roller oder dem Fahrzeug zur Anwendung kommen.

43. Roller oder anderes selbst- oder fußgetriebenes Fahrzeug nach Anspruch 1, bei dem der Roller oder das Fahrzeug einen dreirädrigen, zusammenklappbaren Roller oder Mikroroller aufweist.

44. Roller oder anderes selbst- oder fußgetriebenes Fahrzeug nach Anspruch 1, bei dem der Roller mindestens zwei Hinterräder aufweist und außerdem eine hintere Bremse (38; 238) umfasst.

45. Roller nach Anspruch 44, bei dem die hintere Bremse ein Bremselement aufweist, das elastisch in eine erste Position weg von den Hinterrädern vorgespannt wird, wobei die Anwendung einer Kraft von einem Fuß eines Benutzers bewirkt, dass der erste und zweite Abschnitt des Bremselementes reibschlüssig mit dem jeweiligen ersten und zweiten Hinterrad in Eingriff kommen.

46. Roller oder anderes selbst- oder fußgetriebenes Fahrzeug nach Anspruch 1, bei dem der Roller eine Lenkstange aufweist, wobei die Lenkstange ein weiteres Beleuchtungsmittel enthält, wie beispielsweise einen neuartigen Beleuchtungseffekt.

47. Roller nach Anspruch 46, bei dem das weitere Beleuchtungsmittel oder der neuartige Beleuchtungseffekt an mindestens einem Ende oder beiden Enden der Lenkstange bereitgestellt wird.

48. Roller nach Anspruch 47, bei dem das weitere Beleuchtungsmittel oder der neuartige Beleuchtungseffekt durch eine selbständige batteriebetätigte Einheit bereitgestellt wird.

49. Roller nach entweder Anspruch 47 oder 48, bei dem das weitere Beleuchtungsmittel mindestens eine LED aufweist.

## Revendications

1. Trottinette ou autre véhicule autopropulsé ou propulsé par le pied (10 : 210), comprenant une plate-forme (12) pour supporter un utilisateur, la plate-forme comportant une surface supérieure (14) comportant des moyens d'éclairage (16), **caractérisée en ce que** la plate-forme comprend une partie de plate-forme inférieure (22) et une partie de plate-forme supérieure (20), la partie supérieure de la plate-forme étant au moins en partie transparente ou translucide et comprenant une plaque de support pour le pied.

2. Trottinette ou autre véhicule autopropulsé ou propulsé par le pied selon la revendication 1. dans laquelle les moyens d'éclairage comprennent ou incorporent un effet d'éclairage innovant.

3. Trottinette ou autre véhicule autopropulsé ou propulsé par le pied selon les revendications 1 ou 2, dans laquelle la trottinette ou le véhicule autopropulsé est une trottinette.

4. Trottinette ou autre véhicule autopropulsé ou propulsé par le pied selon l'une quelconque des revendications 1 à 3, dans laquelle la trottinette est une micro-trottinette.

5. Trottinette ou autre véhicule autopropulsé ou propulsé par le pied selon l'une quelconque des revendications 1 à 4, dans laquelle la trottinette est pliable.

6. Trottinette ou autre véhicule autopropulsé ou propulsé par le pied selon les revendications 1 ou 2, dans laquelle la trottinette ou le véhicule autopropulsé est une planche à roulettes, par exemple une planche à roulettes d'entraînement comportant une poignée, la poignée pouvant optionnellement être repliée.

7. Trottinette ou autre véhicule autopropulsé ou propulsé par le pied selon l'une quelconque des revendications 1 à 6. dans laquelle au moins une partie de la plate-forme est formée à partir d'un matériau métallique extrudé.

8. Trottinette ou autre véhicule autopropulsé ou propulsé par le pied selon l'une quelconque des revendications 1 à 7, dans laquelle au moins une partie de la plate-forme comprend un matériau polymère ou plastique.

9. Trottinette ou autre véhicule autopropulsé ou propulsé par le pied selon la revendication 8. dans laquelle le métal est pour l'essentiel de l'aluminium ou un alliage d'aluminium.

10. Trottinette ou autre véhicule autopropulsé ou propulsé par le pied selon l'une quelconque des revendications 1 à 9, dans laquelle la partie inférieure de la plate-forme est extrudée à partir d'un matériau métallique, la partie supérieure de la plate-forme étant formée à partir d'un matériau plastique.

11. Trottinette ou autre véhicule autopropulsé ou propulsé par le pied selon la revendication 10, dans laquelle la plate-forme englobe en outre des capuchons d'extrémité (24, 26), assurant l'assemblage des parties inférieure et supérieure de la plate-forme.

12. Trottinette ou autre véhicule autopropulsé ou propulsé par le pied selon l'une quelconque des revendications 1 à 11. dans laquelle les moyens d'éclairage sont agencés au-dessous de la plate-forme, de manière adjacente à celle-ci ou dans celle-ci.

13. Trottinette ou autre véhicule autopropulsé ou propulsé par le pied selon l'une quelconque des revendications 1 à 11, ou selon la revendication 12. dépendant des revendications 10 ou 11. dans laquelle la lumière passe en service à travers la partie supérieure transparente ou translucide de la plate-forme et/ou passe à travers des surfaces internes, par exemple des parois latérales de celle-ci, et est réfléchie à partir de celles-ci.

14. Trottinette ou autre véhicule autopropulsé ou propulsé par le pied selon les revendications 10 ou 13, dans laquelle la partie supérieure transparente ou translucide de la plate-forme permet le passage de la lumière provenant des moyens d'éclairage à travers au moins une partie d'une surface supérieure de la plate-forme.

15. Trottinette ou autre véhicule autopropulsé ou propulsé par le pied selon l'une quelconque des revendications 10, 11 ou 14. dans laquelle la partie supérieure transparente ou translucide de la plate-forme est translucide.

16. Trottinette ou autre véhicule autopropulsé ou propulsé par le pied selon l'une quelconque des revendications 10, 11 ou 14, dans laquelle la partie supérieure transparente ou translucide de la plate-forme est transparente.

17. Trottinette ou autre véhicule autopropulsé ou propulsé par le pied selon la revendication 15, dans laquelle la partie supérieure transparente ou translucide de la plate-forme est translucide, entraînant un effet laiteux.

18. Trottinette ou autre véhicule autopropulsé ou propulsé par le pied selon l'une quelconque des revendications 1 à 17, dans laquelle le moyen d'éclairage est établi par plusieurs sources de lumière, par exemple des diodes électroluminescentes (DEL) (68 ; 168).

19. Trottinette ou autre véhicule autopropulsé ou propulsé par le pied selon l'une quelconque des revendications 1 à 18. dans laquelle les moyens d'éclairage sont fournis en une ou plusieurs couleurs, sélectionnées parmi le rouge, le bleu, le vert, le jaune, le blanc, le mauve, le rose, le doré, le turquoise, l'orange.

20. Trottinette ou autre véhicule autopropulsé ou propulsé par le pied selon la revendication 18, dans laquelle les DEL sont des DEL d'affichage montées en surface sur une carte de circuit imprimé (PCB) (18 ; 118).

21. Trottinette ou autre véhicule autopropulsé ou propulsé par le pied selon la revendication 20. dépendant de la revendication 10, dans laquelle la PCB est agencée entre les parties inférieure et supérieure de la plate-forme.

22. Trottinette ou autre véhicule autopropulsé ou propulsé par le pied selon la revendication 20. dans laquelle la PCB est agencée sur au moins une partie d'une surface supérieure de la plate-forme.

23. Trottinette ou autre véhicule autopropulsé ou propulsé par le pied selon l'une quelconque des revendications 20 à 22. dans laquelle la PCB est fixée sur la plate-forme de la trottinette ou du véhicule autopropulsé.

24. Trottinette ou autre véhicule autopropulsé ou propulsé par le pied selon l'une quelconque des revendications 20 à 23, dans laquelle la PCB est recouverte par un revêtement composé par exemple de résine époxyde.

25. Trottinette ou autre véhicule autopropulsé ou propulsé par le pied selon l'une quelconque des revendications 20 à 24, dans laquelle la PCB est recouverte par un moyen opaque ou translucide, papier ou carton, agencé de sorte que la lumière provenant des moyens d'éclairage passe à travers le moyen opaque ou translucide, papier ou carton, et est visible à travers des ouvertures dans le moyen opaque ou translucide, papier ou carton.

26. Trottinette ou autre véhicule autopropulsé ou propulsé par le pied selon la revendication 18, dépendant de la revendication 10, dans laquelle la partie transparente ou translucide de la plate-forme recouvre les DEL.

27. Trottinette ou autre véhicule autopropulsé ou propulsé par le pied selon la revendication 10. dans laquelle la partie supérieure transparente ou translucide de la plate-forme comprend un matériau polymère.

28. Trottinette ou autre véhicule autopropulsé ou propulsé par le pied selon la revendication 10, dans laquelle la partie supérieure transparente ou translucide de la plate-forme est enroulée autour d'un ou de plusieurs bords (46 ; 48) de la première partie de la plate-forme.

29. Trottinette ou autre véhicule autopropulsé ou propulsé par le pied selon la revendication 1. dans laquelle les moyens d'éclairage sont agencés le long d'au moins des première et deuxième régions de la plate-forme, les première et deuxième régions de la plate-forme étant adjacentes aux premier et deuxième côtés de la plate-forme.

30. Trottinette ou autre véhicule autopropulsé ou propulsé par le pied selon l'une quelconque des revendications 1 à 29, dans laquelle le moyen d'éclairage définit une forme fermée sur une partie de la plate-forme, par exemple une partie sur laquelle l'utilisateur devrait placer un pied en service.

31. Trottinette ou autre véhicule autopropulsé ou propulsé par le pied selon l'une quelconque des revendications 1 à 30, dans laquelle la trottinette ou un autre véhicule autopropulsé englobe un moyen de commande (40), permettant à un utilisateur de sélectionner un mode opérationnel désiré des moyens d'éclairage.

32. Trottinette ou autre véhicule autopropulsé ou propulsé par le pied selon l'une quelconque des revendications 1 à 31, dans laquelle le moyen de commande comprend un moyen de commutateur (41), le moyen de commande pouvant fonctionner dans plusieurs modes, sélectionnés parmi les modes on et off, et optionnellement les modes continu, clignotant, stroboscopique ou chenillard.

33. Trottinette ou autre véhicule autopropulsé ou propulsé par le pied selon l'une quelconque des revendications 1 à 32, dans laquelle le moyen d'éclairage est actionné par une ou plusieurs batteries.

34. Trottinette ou autre véhicule autopropulsé ou propulsé par le pied selon la revendication 31, dans laquelle le moyen de commande comprend un commutateur à actionnement par vibrations.

35. Trottinette ou autre véhicule autopropulsé ou propulsé par le pied selon les revendications 31 ou 32, dans laquelle le moyen de commande comprend un capteur du poids.

36. Trottinette ou autre véhicule autopropulsé ou propulsé par le pied selon les revendications 34 ou 35. dans laquelle, après son activation en service, le moyen d'éclairage assure l'éclairage pendant une période de temps fixe.

37. Trottinette ou autre véhicule autopropulsé ou propulsé par le pied selon la revendication 24. dépendant de la revendication 5, dans laquelle au moins une partie du circuit de la PCB est agencée au niveau d'une extrémité de la PCB, adjacente à au mois un côté d'une charnière de la trottinette.

38. Trottinette ou autre véhicule autopropulsé ou propulsé par le pied selon l'une quelconque des revendications 1 à 37, dans laquelle la trottinette ou le véhicule autopropulsé est une trottinette à deux roues ou une trottinette à trois roues, comportant une seule roue avant (28) et deux roues arrière (30), les roues arrière étant coaxiales l'une à l'autre.

39. Trottinette ou autre véhicule autopropulsé ou propulsé par le pied selon la revendication 10 ou selon l'une quelconque des revendications 11 à 37, dépendant de la revendication 10, comprenant un moyen pour espacer la partie inférieure de la plate-forme de la partie supérieure de la plate-forme.

40. Trottinette ou autre véhicule autopropulsé ou propulsé par le pied selon la revendication 39. dans laquelle le moyen d'espacement comprend plusieurs piliers (66), s'étendant à partir de la partie supérieure de la plate-forme.

41. Elément pratiquement plan, comprenant la partie supérieure de la plate-forme du véhicule autopropulsé ou propulsé par le pied selon l'une quelconque des revendications 1 à 40.

42. Trottinette ou autre véhicule autopropulsé ou propulsé par le pied selon la revendication 1, dans laquelle le moyen d'éclairage peut fonctionner en réponse à une vibration ou à un impact appliquée à la trottinette ou au véhicule.

43. Trottinette ou autre véhicule autopropulsé ou propulsé par le pied selon la revendication 1, dans laquelle la trottinette ou le véhicule comprend une trottinette pliable à trois roues ou une micro-trottinette.

44. Trottinette ou autre véhicule autopropulsé ou propulsé par le pied selon la revendication 1, dans laquelle la trottinette comporte au moins deux roues arrière et englobe en outre un frein arrière (38 : 238).

45. Trottinette selon la revendication 44, dans laquelle le frein arrière comprend un élément de frein poussé de manière élastique dans une première position, à l'écart des roues arrière, l'application d'une force par un pied d'un utilisateur entraînant l'engagement par frottement des première et deuxième parties de l'élément de frein dans les première et deuxième roues arrière respectives.

46. Trottinette ou autre véhicule autopropulsé ou propulsé par le pied selon la revendication 1, dans laquelle la trottinette comporte un guidon , le guidon incorporant un moyen d'éclairage additionnel, par exemple un effet d'éclairage innovant.

47. Trottinette selon la revendication 46, dans laquelle le moyen d'éclairage additionnel ou l'effet d'éclairage innovant est prévu sur au moins une extrémité ou sur les deux extrémités du guidon.

48. Trottinette selon la revendication 47, dans laquelle le moyen d'éclairage additionnel ou l'effet d'éclairage innovant est fourni par une unité actionnée par une batterie autonome.

49. Trottinette selon les revendications 47 ou 48, dans laquelle le moyen d'éclairage additionnel comprend au moins une DEL.
